## Europäisches Patentamt
## European Patent Office
## Office européen des brevets

(19)

(11) Veröffentlichungsnummer : **0 403 846 B1**

(12)

# EUROPÄISCHE PATENTSCHRIFT

(45) Veröffentlichungstag der Patentschrift :
**21.10.92 Patentblatt 92/43**

(51) Int. Cl.$^5$ : **B60J 3/02**

(21) Anmeldenummer : **90110327.5**

(22) Anmeldetag : **31.05.90**

(54) **Sonnenblende für Fahrzeuge.**

(30) Priorität : **23.06.89 DE 3920592**

(43) Veröffentlichungstag der Anmeldung :
**27.12.90 Patentblatt 90/52**

(45) Bekanntmachung des Hinweises auf die
Patenterteilung :
**21.10.92 Patentblatt 92/43**

(84) Benannte Vertragsstaaten :
**BE DE ES FR GB IT SE**

(56) Entgegenhaltungen :
**EP-A- 0 111 819**
**EP-A- 0 314 652**
**EP-A- 0 340 195**
**DE-A- 3 000 810**
**DE-A- 3 614 481**
**US-A- 3 926 470**
**US-A- 4 764 852**

(73) Patentinhaber : **Gebr. Happich GmbH**
**Postfach 10 02 49 Clausenbrücke 1**
**W-5600 Wuppertal 1 (DE)**

(72) Erfinder : **Dietz, Günther**
**Zum Lohbusch 44 C**
**W-5600 Wuppertal 1 (DE)**
Erfinder : **Nowak, Manfred**
**Steinberg 16**
**W-5650 Solingen (DE)**
Erfinder : **Viertel, Lothar**
**Lilienstrasse 4**
**W-6636 Altforweiler (DE)**
Erfinder : **Kaiser, Klaus-Peter**
**Sellscheid 42**
**W-5632 Wermelskirchen (DE)**

EP 0 403 846 B1

## Beschreibung

Die Erfindung betrifft eine Sonnenblende für Fahrzeuge, aus einem Sonnenblendenkörper mit einem Kern aus Schaummaterial und einer mehrteiligen Versteifungseinlage mit einem in einer Vertiefung des Sonnenblendenkörpers eingesetzten Spiegel.

Bei einer bekannten Sonnenblende dieser Art, bei der der Spiegel an einem Träger aus einem Rahmen und einem Gehäuse angeordnet ist, besteht der Boden der Vertiefung nur aus einer dünnen Schicht Schaummaterial, mit der das Gehäuse mittels Heißkleber verklebt ist. Die Stabilität und mechanische Widerstandsfähigkeit der Sonnenblende in diesem Bereich ist, solange das Gehäuse nicht in die Vertiefung eingeklebt ist, äußerst gering, so daß der Kern aus Schaummaterial leicht beschädigt werden kann. Des weiteren kann sich der Heißkleber vom Schaummaterial lösen, so daß für den Spiegelträger keine unter allen Umständen sichere Befestigung gegeben ist. Schließlich kann sich der Heißkleber, wenn er punktweise aufgetragen wird, durch das Schaummaterial durchdrücken und nach dem Verfestigen harte Stellen bilden, die ggf. auch auftragen, so daß sie fühlbar und/oder sichtbar sind. Hinzu kommt, daß das Auftragen des Heißklebers und Einsetzen des Gehäuses zeitaufwendig ist, da das Erkalten und Verfestigen des Heißklebers abgewartet werden muß, bevor weitere Montagearbeitsgänge durchgeführt werden können.

Der Erfindung liegt die Aufgabe zugrunde, die eingangs erwähnte Sonnenblende hinsichtlich ihrer Stabilität, mechanischen Widerstandsfähigkeit und Montage zu verbessern.

Gelöst wird diese Aufgabe bei einer Sonnenblende der eingangs erwähnten Art dadurch, daß erfindungsgemäß die Versteifungseinlage im Bereich des Bodens der Vertiefung des Sonnenblendenkörpers durch ein mit dem Sonnenblendenkörper fest verbundenes flächiges Kunststoffteil, von dem wenigstens die Außenfläche zumindest bereichsweise von Schaummaterial bedeckt ist, gebildet ist. Dieses flächige Kunststoffteil ist ein fester Bestandteil der Versteifungseinlage und bildet den Boden der Vertiefung. Auf diese Weise ist der Boden der Vertiefung mechanisch widerstandsfähig und kann zur Befestigung des Spiegels durch Verschrauben oder Verklipsen dienen. Auch ein Verkleben ist möglich, da der Heißkleber mit dem die Außenfläche des Kerns aus Schaummaterial nicht mehr in Berührung kommt und somit weder auftragen noch harte Stellen bilden kann.

Die Versteifungseinlage kann vorteilhafterweise aus weiteren Kunststoffteilen, nämlich aus flächigen, aber durchbrochenen, den Bereich der Vertiefung freilassenden und in den Bereichen seitlich von der Vertiefung angeordneten Kunststoffelementen, bestehen, die wenigstens einen Vorsprung zum Einhängen wenigstens eines entsprechenden Bügels am flächigen Kunststoffteil aufweisen. Es kann sich hierbei aus verhältnismäßig einfachen, aus Rippen und Stegen bestehenden Kunststoffspritzgußteilen handeln, die sich mit einem im Bereich einer Längskante des Sonnenblendenkörpers zwischen den seitlichen Kunststoffelementen angeordneten Verbindungselement zusammenstecken lassen. Zu diesem Zweck ist das Verbindungselement vorzugsweise als Rohr ausgebildet, in dessen Enden Fortsätze an dem seitlichen Kunststoffelementen eingesteckt sind. Dieses Rohr läßt sich dann auf einfache Weise als Lager für eine Schwenkbefestigung des Sonnenblendenkörpers am Fahrzeug benutzen.

Eine zusätzliche Versteifung des Sonnenblendenkörpers läßt sich durch einen Drahtbügel erreichen, der die seitlichen Kunststoffelemente im Bereich der anderen Längskante des Sonnenblendenkörpers miteinander verbindet.

Besonders vorteilhaft läßt sich der erfindungsgemäß gestaltete Sonnenblendenkörper mit der aus den Kunststoffelementen gebildeten Versteifungseinlage in Verbindung mit einem beleuchteten Spiegel verwenden. In diesem Fall wird der Träger für den Spiegel durch ein Gehäuse mit einer darin angeordneten Beleuchtungsvorrichtung und einem Spiegelrahmen mit zumindest einem Leuchtfenster gebildet.

Die Montage des Spiegelträgers ist dann besonders einfach, wenn die Beleuchtungsvorrichtung aus einer Leiterplatte mit Kontaktzungen für wenigstens eine Glühbirne und Kontakten zur elektrischen Verbindung mit entsprechenden Gegenkontakten auf der Versteifungseinlage im Boden der Vertiefung besteht und die Leiterplatte mit der Versteifungseinlage mittels Durchbrechungen im Gehäuse durchgreifender Schrauben und/oder einer Klipsanordnung verbunden ist.

Die Leiterplatte dient daher in diesem Fall zur Befestigung des Gehäuses an der Versteifungseinlage, während der Spiegel mit dem Spiegelrahmen anschließend in das Gehäuse eingeklipst wird.

Vorteilhafterweise kann die Leiterplatte auf mindestens zwei, die elektrischen Gegenkontakte aufweisenden Domen der Versteifungseinlage befestigt sein, die die Durchbrechungen im Gehäuse durchgreifen und das Gehäuse positionieren. Die Leiterplatte weist zu diesem Zweck im Bereich der elektrischen Gegenkontakte auf den Domen entsprechende Kontakte auf, die gegen die Gegenkontakte durch die Schrauben- oder die Klipsanordnung gepreßt werden.

Diese elektrischen Gegenkontakte lassen sich in besonders einfacher Weise aus abgewinkelten, im Bereich der Dome durch die Versteifungseinlage hindurch gesteckten, die Domenden übergreifenden Kontaktfahnen herstellen, deren Enden hinter auf der Außenseite der Versteifungseinlage vorstehende Nasen eingeklemmt und mit je einem, zu Kontakten an einer Gegenlagerachse führenden oder durch eine hohle Trägerachse des Sonnenblendenkörpers geführten Kabel verbunden sind.

Falls der Spiegel durch eine am Spiegelrahmen schwenkbar angeordnete Abdeckklappe abdeckbar ist, läßt sich diese Abdeckklappe dazu benutzen, einen auf der Leiterplatte angeordneten Schalter mittels eines in das Gehäuse hineinragenden Vorsprungs an der Abdeckklappe, der mit einem in den Bewegungsbereich des Vorsprungs ragenden Betätigungselement zusammenwirkt, betätigen.

Die Erfindung wird nachstehend anhand eines in der Zeichnung dargestellten Ausführungsbeispiels des Näheren erläutert, und es zeigen:

Fig. 1 eine Ansicht der erfindungsgemäßen Sonnenblende mit beleuchtetem Make-up Spiegel und aufgeklappter Abdeckklappe,

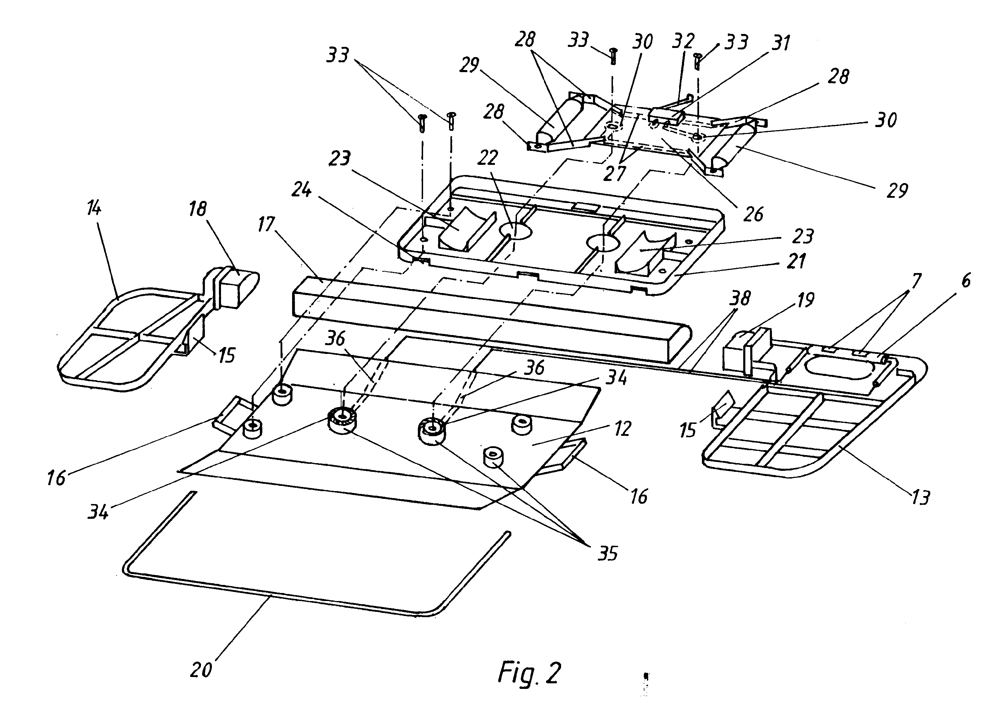

Fig. 2 eine auseinandergezogene perspektivische Darstellung der Versteifungseinlage des Sonnenblendenkörpers, des Gehäuses und der Beleuchtungseinheit und

Fig. 3 einen Schnitt durch den Sonnenblendenkörper entlang der Linie III - III in Fig. 1.

Ein Sonnenblendenkörper 1 besteht aus einem Kern 2 aus Schaummaterial und einer Hülle 3 aus PVC-Folie oder Stoff. Zur schwenk- und klappbaren Befestigung an einer Fahrzeugkarosserie dient eine im Sonnenblendenkörper 1 drehbar angeordnete Achse 4 und ein darauf schwenkbar angeordnetes Böckchen 5 mit Anschraublöchern. Am entgegengesetzten Ende der Sonnenblende ist eine Gegenlagerachse 6 angeordnet, die zum lösbaren und drehbaren Einhängen in ein nicht gezeigtes Gegenlagerböckchen an der Fahrzeugkarosserie dient. Der im Sonnenblendenkörper 1 drehbar gelagerte Schenkel der Achse 4 und die Gegenlagerachse 6 verlaufen fluchtend entlang eines Randbereichs des Sonnenblendenkörpers 1 und bilden die Achse beim Herunterklappen der Sonnenblende gegen eine Windschutzscheibe, um sie von der Nichtgebrauchslage im Bereich des Dachhimmels in die Gebrauchslage im Bereich der Windschutzscheibe zu bewegen.

Der Sonnenblendenkörper 1 läßt sich auch gegen ein Seitenfenster verschwenken, indem die Gegenlagerachse 6 aus dem Gegenlagerböckchen ausgehängt und um den im Böckchen 5 gelagerten Schenkel der Achse 4 gegen das Seitenfenster geschwenkt wird.

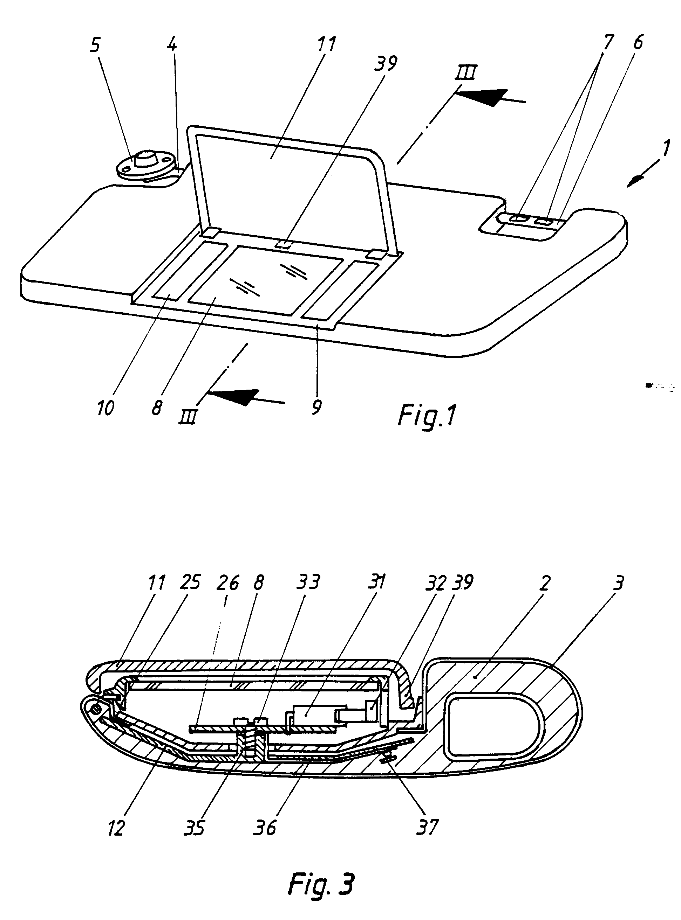

Auf der Gegenlagerachse 6 sind elektrische Kontakte 7 angeordnet, die mit entsprechenden Kontakten im Gegenlagerböckchen zusammenwirken und zur Stromversorgung einer Beleuchtungsvorrichtung dienen, von der in Fig. 1 zwei seitlich eines Spiegels 8 in einem Spiegelrahmen 9 angeordnete Leuchtfenster 10 sichtbar sind. Die Leuchtfenster 10 und der Spiegel 8 lassen sich durch eine Abdeckklappe 11, die oberhalb des Spiegels 8 und der Leuchtfenster 10 angelenkt ist, abdecken.

Im Kern 2 aus Schaummaterial ist eine Versteifungseinlage angeordnet, die aus einem flächigen Kunststoffteil 12, seitlich davon angeordnete aus Stegen und Rippen bestehenden Kunststoffelementen 13, 14, einem Verbindungselement in Form eines Rohres 17 und einem Drahtbügel 20 besteht. Die Kunststoffelemente 13, 14 weisen Fortsätze 18, 19 auf, die sich in die Enden des Rohres 17 mit Festsitz einstecken lassen. Zwischen den Kunststoffelementen 13, 14, dem Rohr 17 und dem Drahtbügel 20 ist ein freier Raum gebildet, in den ein flächiges Kunststoffteil 12 eingefügt ist. Zu diesem Zweck weisen die Kunststoffelemente 13, 14 Vorsprünge 15 und das flächige Kunststoffteil 12 Bügel 16 auf, so daß sich die Bügel 16 in die Vorsprünge 15 einhängen lassen. Die Vorsprünge 15 dienen zusätzlich zur Aufnahme der Enden des Drahtbügels 20. Das Rohr 17 ist als Lager für den einen Schenkel der Achse 4 ausgebildet.

Die so zusammengefügte Versteifungseinlage dient als Träger für das den Kern 2 des Sonnenblendenkörpers 1 bildende Schaummaterial. Dieses Schaummaterial kann z.B. aus Polyurethanschaum bestehen, der in flüssiger Form in eine Schäumform, in die vorher die Versteifungseinlage eingelegt wurde, eingebracht wird und dort aufschäumt und aushärtet. Das Schaummaterial kann auch aus in eine Schäumform eingebrachte Polyäthylenschaumkugeln bestehen, die sich durch Hitzeeinwirkung in der Schäumform miteinander und mit der Versteifungseinlage verbinden und den eigenstabilen Kern 2 des Sonnenblendenkörpers 1 bilden.

Schließlich kann das Schaummaterial auch aus Schaumstoffzuschnitten bestehen, die in geeigneter Weise durch Kleben oder Hitzeeinwirkung eine feste Verbindung mit der Versteifungseinlage eingehen.

Das flächige Kunststoffteil 12 bildet den Boden einer Vertiefung im Sonnenblendenkörper 1, von dem wenigstens die Außenfläche zumindest bereichsweise von Schaummaterial bedeckt ist. Diese Vertiefung dient zur Aufnahme des Spiegelrahmens 9 und eines wannenartigen Gehäuses 21. Das Gehäuse 21 weist Durchbrechungen 22, metallisierte Reflektoren 23 und Rastausnehmungen 24 auf und ist mittels einer Leiterplatte 26 am flächigen Kunststoffteil 12 befestigt.

Die Leiterplatte 26 ist mit voneinander isolierten Leiterbahnen 27 versehen, die mit Kontaktzungen 28 verlötet sind und als Träger für Soffittenbirnen 29 dienen. Die Leiterbahnen 27 sind zu zwei Kontakten 30 geführt, die durchbohrt sind, so daß sich die Leiterplatte 26 mittels Schrauben 33 mit dem flächigen Kunststoffteil 12 verschrauben läßt. Das flächige Kunststoffteil 12 weist zu diesem Zweck mindestens zwei Dome 35 auf, die durch Durchbrechungen 22 im Gehäuse 21 hindurchragen und als Auflagen für die Leiterplatte 26 dienen. Das Gehäuse 21 wird durch die Dome 35 positioniert und durch die Leiterplatte 26 mit den Schrauben 33 sicher festgehalten. Gegebenenfalls können in den Eckbereichen des Gehäuses 21 weitere Schrauben 33 vorgesehen sein, die sich in entsprechende Dome 35 des flächigen Kunststoffteils 12 einschrauben lassen, um einen bei jeder Temperatur klapperfreien Sitz zu gewährleisten.

Die Verbindung der Leiterplatte 26 und des Gehäuses 21 mit dem flächigen Kunststoffteil 12 kann auch statt mit Schrauben 33 mittels einer Klipsanordnung im Bereich der Dome 35 oder durch Ultraschallverschweißung erfolgen.

Die Kontakte 30 liegen auf entsprechenden, die Domenden übergreifenden Gegenkontakten 34 auf. Diese Gegenkontakte 34 werden durch die Enden von abgewinkelten Kontaktfahnen 36 gebildet, die im Bereich der Dome 35 durch das flächige Kunststoffteil 12 hindurchgesteckt und auf der Außenseite hinter vorstehende Nasen 37 geklemmt sind.

Jede der Kontaktfahnen 36 ist mit einem Kabel 38 verbunden, welche zu den entsprechenden Kontakten 7 an der Gegenlagerachse 6 geführt sind.

Die Kabel 38 können auch durch das Rohr 17 und durch eine hohl ausgebildete Achse 4 aus dem Sonnenblendenkörper 1 hinausgeführt und mit der Lichtanlage des Fahrzeugs verbunden sein.

Die Glühbirnen 29 erhalten nur dann Strom, wenn der Sonnenblendenkörper 1 aus seiner Nichtgebrauchs- in die Gebrauchslage heruntergeklappt und die Abdeckklappe 11 nach oben geklappt ist. Dies wird dadurch erreicht, daß die Kontakte 7 nur in der heruntergeklappten Stellung des Sonnenblendenkörpers 1 in den Bereich von Kontaktzungen im nicht dargestellten Gegenlagerböckchen gelangen. Des weiteren ist zwischen einer Leiterbahn 27 und einem Kontakt 30 auf der Leiterplatte 26 ein Mikroschalter 31 mit einem Betätigungshebel 32 angeordnet. Dieser Betätigungshebel 32 liegt im Bewegungsbereich eines Vorsprungs 39 an der Abdeckklappe 11, so daß der Mikroschalter 31 nur geschlossen ist, wenn die Abdeckklappe 11 hochgeklappt und dadurch der Betätigungshebel 32 durch den Vorsprung 39 betätigt wurde.

Der Spiegelrahmen 9 weist Rastnasen 25 auf, die in die entsprechenden Rastausnehmungen 24 am Gehäuse 21 eingreifen und ein leichtes Zusammenfügen, aber auch Lösen des Spiegelrahmens 9 mit dem Gehäuse 21 gestatten.

**Patentansprüche**

1. Sonnenblende für Fahrzeuge aus einem Sonnenblendenkörper (1) mit einem Kern (2) aus Schaummaterial und einer mehrteiligen Versteifungseinlage (12, 13, 14, 17, 20) mit einem in einer Vertiefung des Sonnenblendenkörpers (1) eingesetzten Spiegel (8), dadurch gekennzeichnet, daß die Versteifungseinlage (12, 13, 14, 17, 20) im Bereich des Bodens der Vertiefung des Sonnenblendenkörpers (1) durch ein mit dem Sonnenblendenkörper (1) fest verbundenes, flächiges Kunststoffteil (12), von dem wenigstens die Außenfläche zumindest bereichsweise von Schaummaterial bedeckt ist, gebildet ist.

2. Sonnenblende nach Anspruch 1, dadurch gekennzeichnet, daß die Versteifungseinlage (12, 13, 14, 17, 20) in den Bereichen seitlich von der Vertiefung durch flächige aber durchbrochene, den Bereich der Vertiefung freilassende Kunststoffelemente (13, 14) gebildet wird und wenigstens einen Vorsprung (15) zum Einhängen wenigstens eines entsprechenden Bügels (16) am flächigen Kunststoffteil (12) aufweist.

3. Sonnenblende nach Anspruch 2, dadurch gekennzeichnet, daß wenigstens im Bereich einer Längskante des Sonnenblendenkörpers (1) zwischen den seitlichen Kunststoffelementen (13, 14) ein Verbindungselement (17) angeordnet ist.

4. Sonnenblende nach Anspruch 3, dadurch gekennzeichnet, daß das Verbindungselement (17) als Lager für eine Schwenkbefestigung (4, 5) des Sonnenblendenkörpers (1) am Fahrzeug ausgebildet ist.

5. Sonnenblende nach Anspruch 4, dadurch gekennzeichnet, daß das Verbindungselement (17) als Rohr ausgebildet und Fortsätze (18, 19) an den seitlichen Kunststoffelementen (13, 14) in die Rohrenden eingesteckt sind.

6. Sonnenblende nach einem oder mehreren der Ansprüche 2 bis 5, dadurch gekennzeichnet, daß die seitlichen Kunststoffelemente (13, 14) durch einen Drahtbügel (20) im Bereich der anderen Längskante des Sonnenblendenkörpers (1) miteinander verbunden sind.

7. Sonnenblende nach einem oder mehreren der Ansprüche 1 bis 6, dadurch gekennzeichnet, daß der Spiegel (8) auf einem Träger (9, 21) angeordnet und mit der Versteifungseinlage (12) durch Schrauben (33) und/oder eine Klipsanordnung verbunden ist.

8. Sonnenblende nach Anspruch 7, dadurch gekennzeichnet, daß der Träger für den Spiegel (8) durch ein Gehäuse (21) mit einer darin angeordneten Beleuchtungsvorrichtung (26 bis 31) und einem Spiegelrahmen (9) mit zumindest einem Leuchtfenster (10) gebildet ist.

9. Sonnenblende nach Anspruch 8, dadurch gekennzeichnet, daß die Beleuchtungsvorrichtung aus einer Leiterplatte (26) mit Kontaktzungen (28) für wenigstens eine Glühbirne (29) und Kontakten (30) zur elektrischen Verbindung mit entsprechenden Gegenkontakten (34) auf der Versteifungseinlage (12) im Boden der Vertiefung besteht.

10. Sonnenblende nach Anspruch 9, dadurch gekennzeichnet, daß die Leiterplatte (26) mit der Versteifungseinlage (12) mittels Durchbrechungen (22) im Gehäuse (21) durchgreifender Schrauben (33) und/oder einer Klipsanordnung verbunden ist.

11. Sonnenblende nach Anspruch 10, dadurch gekennzeichnet, daß die Leiterplatte (26) auf mindestens zwei, die elektrischen Gegenkontakte (34) aufweisenden Domen (35) der Versteifungseinlage (12) befestigt ist.

12. Sonnenblende nach Anspruch 11, dadurch gekennzeichnet, daß die elektrischen Gegenkontakte (34) aus abgewinkelten, im Bereich der Dome (35) durch die Versteifungseinlage (12) hindurchgesteckten, die Domenden übergreifenden Kontaktfahnen (36) bestehen.

13. Sonnenblende nach Anspruch 12, dadurch gekennzeichnet, daß die Enden der Kontaktfahnen (36) auf der Außenseite der Versteifungseinlage (12) hinter vorstehende Nasen (37) geklemmt und mit je einem, zu Kontakten (7) an einer Gegenlagerachse (6) führenden oder durch eine hohle Trägerachse des Sonnenblendenkörper (1) geführten Kabel (38) verbunden sind.

14. Sonnenblende nach einem oder mehreren der Ansprüche 9 bis 13, dadurch gekennzeichnet, daß am Spiegelrahmen (9) eine schwenkbare Abdeckklappe (11) mit einem in das Gehäuse (21) hineinragenden Vorsprung (39) und auf der Leiterplatte (26) ein Schalter (31) mit in den Bewegungsbereich des Vorsprungs (39) an der Abdeckklappe (11) ragenden Betätigungselement (32) angeordnet sind.

15. Sonnenblende nach einem oder mehreren der Ansprüche 10 bis 14, dadurch gekennzeichnet, daß die Leiterplatte (26) als Halterung für das Gehäuse (21) in der Vertiefung dient.

16. Sonnenblende nach Anspruch 15, dadurch gekennzeichnet, daß das Gehäuse (21) durch zusätzliche Schrauben (33) oder Klipsanordnungen mit der Versteifungseinlage (12) verbunden ist.

**Claims**

1. A sun visor for vehicles, having a sun visor body (1) with a core (2) of foam material and a reinforcement inlay of several parts (12, 13, 14, 17, 20), with a mirror (8) inserted in a depression of the sun visor body (1), characterised in that the reinforcement inlay (12, 13, 14, 17, 20) in the region of the base of the depression of the sun visor body (1) is formed by a laminar piece of plastics material (12), which is firmly connected with the sun visor body (1), at least the outer surface of which is covered by foam material at least over some areas.

2. A sun visor according to Claim 1, characterised in that the reinforcement inlay (12, 13, 14, 17, 20) in the regions to the side of the depression is formed by laminar, but perforated, plastics elements (13, 14) leaving free the region of the depression, and has at least one projection (15) for the suspension of at least one corresponding bracket (16) on the laminar piece of plastics material (12).

3. A sun visor according to Claim 2, characterised in that at least in the region of a longitudinal edge of the sun visor body (1) between the lateral plastics elements (13, 14) a connecting element (17) is arranged.

4. A sun visor according to Claim 3, characterised in that the connecting element (17) is constructed as a bearing for a swivel attachment (4, 5) of the sun visor body (1) on the vehicle.

5. A sun visor according to Claim 4, characterised in that the connecting element (17) is constructed as a tube and extensions (18, 19) of the lateral plastics elements (13, 14) are inserted into the ends of the tube.

6. A sun visor according to one or more of Claims 2 to 5, characterised in that the lateral plastics elements (13, 14) are connected with each other by a wire bracket (20) in the region of the other longitudinal edge of the sun visor body (1).

7. A sun visor according to one or more of Claims 1 to 6, characterised in that the mirror (8) is arranged on a carrier (9, 21) and is connected with the reinforcement inlay (12) by screws (33) and/or a clip arrangement.

8. A sun visor according to Claim 7, characterised in that the carrier for the mirror (8) is formed by a housing (21) with a lighting device (26 to 31) arranged therein, and with a mirror frame (9) with at least one illuminating window (10).

9. A sun visor according to Claim 8, characterised in that the lighting device comprises a printed circuit board (26) with contact tongues (28) for at least one light bulb (29) and contacts (30) for electrical connection with corresponding support contacts (34) on the reinforcement inlay (12) in the base of the depression.

10. A sun visor according to Claim 9, characterised in that the printed circuit board (26) is connected with the reinforcement inlay (12) by means of screws (33) engaging through perforations (22) in the housing (21) and/or by means of a clip arrangement.

11. A sun visor according to Claim 10, characterised in that the printed circuit board (26) is attached on at least two raised portions (35) of the reinforcement inlay (12) having the electrical support contacts (34).

12. A sun visor according to Claim 11, characterised in that the electrical support contacts (34) comprise angular contact lugs (36), inserted through the reinforcement inlay (12) in the region of the raised portions (35) and engaging over the raised portion ends.

13. A sun visor according to Claim 12, characterised in that the ends of the contact lugs (36) are clamped on the outer side of the reinforcement inlay (12) behind projecting protrusions (37) and are connected in each case with a cable (38) leading to contacts (7) on an end support pivot axis (6) or carried through a hollow carrier axis of the sun visor body (1).

14. A sun visor according to one or more of Claims 9 to 13, characterised in that an orientable cover flap (11) is arranged on the mirror frame (9), with a projection (39) extending into the housing (21) and a switch (31) is arranged on the printed circuit board (26), with an actuating element (32) projecting into the range of movement of the projection (39) on the cover flap (11).

15. A sun visor according to one or more of Claims 10 to 14, characterised in that the printed circuit board (26) serves as a mounting for the housing (21) in the depression.

16. A sun visor according to Claim 15, characterised in that the housing (21) is connected by additional screws (33) or clip arrangements with the reinforcement inlay (12).

**Revendications**

1. Pare-soleil pour véhicule automobile constitué d'un corps (1) avec un noyau (2) en mousse et une garniture de renfort (12, 13, 14, 17, 20) en plusieurs parties avec un miroir (8) placé dans une partie de creux du corps de pare-soleil (1), caractérisé en ce que la garniture de renfort (12, 13, 14, 17, 20) est formée, dans la région du fond de la partie en creux du corps de pare-soleil (1), par une pièce en matière plastique (12) plate, solidaire du corps de pare-soleil (1), dont au moins la surface extérieure est recouverte au moins en partie par de la mousse.

2. Pare-soleil selon la revendication 1, caractérisé en ce que la garniture de renfort (12, 13, 14, 17, 20) est formée, dans les zones situées sur les côtés de la partie en creux, par des éléments en matière plastique (13, 14) plats mais interrompus, laissant libre la région de la partie en creux, et présente au moins une partie saillante (15) destinée à l'accrochage d'au moins un étrier (16) correspondant sur la pièce en matière plastique (12) plate.

3. Pare-soleil selon la revendication 2, caractérisé en ce qu'il est prévu, au moins dans la région d'un grand côté du corps de pare-soleil (1), un élément de liaison (17) entre les éléments en matière plastique (13, 14) latéraux.

4. Pare-soleil selon la revendication 3, caractérisé en ce que l'élément de liaison (17) est conçu comme un appui sur le véhicule pour une fixation pivotante (4, 5) du corps de pare-soleil (1).

5. Pare-soleil selon la revendication 4, caractérisé en ce que l'élément de liaison (17) est un tube et en ce que des prolongements (18, 19) des éléments en matière plastique (13, 14) latéraux sont introduits dans les extrémités du tube.

6. Pare-soleil selon une ou plusieurs des revendications 2 à 5, caractérisé en ce que les éléments en matière plastique (13, 14) latéraux sont assemblés entre eux par un étrier en fil (20), dans la région de l'autre grand côté du corps de pare-soleil (1).

7. Pare-soleil selon une ou plusieurs des revendications 1 à 6, caractérisé en ce que le miroir (8) est placé sur un support (9, 21) et est assemblé avec la garniture de renfort (12), par des vis (33) et/ou un dispositif de clipsage.

8. Pare-soleil selon la revendication 7, caractérisé en ce que le support du miroir (8) est formé par un boîtier (21) avec un dispositif d'éclairage (26 à 31) placé à l'intérieur et un cadre de miroir (9) avec au moins une fenêtre d'éclairage (10).

9. Pare-soleil selon la revendication 8, caractérisé en ce que le dispositif d'éclairage est constitué par une carte de circuits imprimés (26) avec des languettes de contact (28) pour au moins une ampoule (29) et des contacts (30) pour la liaison électrique avec des contre-contacts (34) correspondants sur la garniture de renfort (12), dans le fond de la partie en creux.

10. Pare-soleil selon la revendication 9, caractérisé en ce que la plaque de circuits imprimés (26) est reliée à la garniture de renfort (12), au moyen de vis (33) traversant des ajours (22) pratiqués dans le boîtier (21) et/ou au moyen d'un dispositif de clipsage.

11. Pare-soleil selon la revendication 10, caractérisé en ce que la plaque de circuits imprimés (26) est fixée sur au moins deux dômes (35), péesentant les contre-contacts électriques (34), de la garniture de renfort (12).

12. Pare-soleil selon la revendication 11, caractérisé en ce que les contre-contacts électriques (34) sont constitués de plots de contact (36) coudes, traversant la garniture de renfort (12) dans la région des dômes (35), passant sur les extrémités des dômes.

13. Pare-soleil selon la revendication 12, caractérisé en ce que les extrémités des plots de contact (36) sont fixées sur le côté extérieur de la garniture de renfort (12), derrière des ergots (37) saillants et sont reliées chacune avec un câble (38) menant aux contacts (7) sur un axe de contre-appui (6) ou traversant un axe de support creux du corps de pare-soleil (1).

14. Pare-soleil selon une ou plusieurs des revendications 9 à 13, caractérisé en ce qu'il est prévu sur le cadre de miroir (9), un cache (9) pivotant avec une partie saillante (39) s'engageant dans le boîtier (21) et, sur la plaque de circuits imprimés (26), un interrupteur (31) avec un élément d'actionnement (32) faisant saillie dans la zone de déplacement de la partie saillante (39) du cache (11).

15. Pare-soleil selon une ou plusieurs des revendications 10 à 14, caractérisé en ce que la plaque de circuits imprimés (26) sert de support au boîtier (21), dans la partie en creux.

16. Pare-soleil selon la revendication 15, caractérisé en ce que le boîtier (21) est assemble par des vis supplémentaires (33) ou des dispositifs de clipsage, avec la garniture de renfort (12).

Fig.1

Fig. 3

Fig. 2